(19) Europäisches Patentamt
European Patent Office
Office européen des brevets

(11) Veröffentlichungsnummer: **0 000 935**
**A1**

(12) # EUROPÄISCHE PATENTANMELDUNG

(21) Anmeldenummer: **78100704.2**

(22) Anmeldetag: **18.08.78**

(51) Int. Cl.[2]: **C 01 B 17/90**

(30) Priorität: **30.08.77 DE 2738993**

(43) Veröffentlichungstag der Anmeldung: **07.03.79 Patentblatt 79/5**

(84) Benannte Vertragsstaaten: **BE CH DE FR GB NL**

(71) Anmelder: **Bayer Aktiengesellschaft, Zentralbereich Patente,Marken und Lizenzen Bayerwerk, D-5090 Leverkusen 1 (DE)**

(72) Erfinder: **Larbig, Wolfgang, Dr., Buschstrasse 151, D-4150 Krefeld (DE)**

(54) **Verfahren zur Reinigung von Schwefelsäure.**

(57) Es wird ein Verfahren zur Reinigung verdünnter Abfall-Schwefelsäure, die als Verunreinigung Stickstoff-Sauerstoff-Verbindungen enthält, beschrieben. Solche Abfallsäuren fallen insbesondere bei der Nitrierung aromatischer Verbindungen an. Zur Reinigung wird die Abfall-Schwefelsäure mit Ammoniumsulfat versetzt und sofort oder später bei Temperaturen von 30–300°C behandelt.

EP 0 000 935 A1

BAYER AKTIENGESELLSCHAFT
Zentralbereich
Patente, Marken und Lizenzen

5090 Leverkusen, Bayerwerk
Zg/Dz/bc

Verfahren zur Reinigung von Schwefelsäure

Die Erfindung betrifft ein Verfahren zur Reinigung wäßriger, bei der Nitrierung aromatischer Verbindungen als Abfallsäure anfallender Schwefelsäure durch Umsetzung mit Ammoniumionen von in ihr als Verunreinigung enthaltenen Stickstoff-Sauerstoff-Verbindungen.

Es ist bekannt, daß bei der Nitrierung aromatischer Verbindungen, z.B. Benzol, Toluol, Xylol, insbesondere von Benzol zu Nitrobenzol, mit Nitriersäure, einem Gemisch von Oleum und/oder Schwefelsäure verschiedener Konzentration und hochkonzentrierter Salpetersäure, als zwangsläufiges Nebenprodukt eine durch das Reaktionswasser verdünnte wäßrige Schwefelsäure anfällt, die durch wechselnde Mengen von Stickstoff-Sauerstoff-Verbindungen verunreinigt ist. Im allgemeinen beträgt der Gehalt dieser sogenannten Abfallsäure etwa zwischen 20 und 96, insbesondere etwa 60 bis 80 Gew.-% $H_2SO_4$, je nach Konzentration der Schwefelsäure in der eingesetzten Nitriersäure und der bei der Nitrierung pro Gewichtseinheit Nitriersäure anfallenden Menge Reaktionswasser, das von der Schwefelsäure aufgenommen wird.

Die darin enthaltenen Stickstoff-Sauerstoff-Verbindungen sind vorwiegend Verbindungen der Summenformel $NO_x$, wobei x für die Zahlen 1, 1,5 oder 2 steht, d.h. der Verbindungen NO, $N_2O_3$, $NO_2$ bzw. $N_2O_4$ sowie diesen Verbindungen entsprechenden Säuren, salpetrige Säure ($HNO_2$) und Nitrosylschwefelsäure ($HSO_4NO$).
Die Hauptkomponente ist $NO_2$, auch in Form der salpetrigen Säure und Nitrosylschwefelsäure, das bereits als $N_2O_4$ in der für die Nitrierung eingesetzten hochkonzentrierten Salpetersäure enthalten ist und bei der Nitrierung in Nebenreaktionen nur teilweise umgesetzt wird.

NO-Verbindungen setzen sich bereits unter Einfluß des Luftsauerstoffs gemäß $2\ NO + O_2 \rightleftharpoons 2\ NO_2 + 27{,}1$ Kcal zu $NO_2$ um.

Derartige Abfallsäure kann auf verschiedene Weise weiter verwendet werden.

Es können damit z.B. Rohphosphate für die Düngemittelfabrikation aufgeschlossen werden. Diese Umsetzung und die meist damit verbundene Gewinnung von Phosphorsäure erfolgt gewöhnlich in der Wärme. Dadurch werden Stickoxide ausgetrieben, die mit der Abluft entweichen.

Nach dem Gleichgewicht der Reaktion

$$2\ NO_2 \rightleftharpoons N_2O_4 \quad + \quad 14{,}7\ \text{Kcal}$$

liegen bei einer Ablufttemperatur von 27°C 20 %, bei 50°C 40 %, bei 100°C 89 % und bei 135°C 99 % in der braunen monomeren Form $NO_2$ vor.

Ferner kann die Abfallsäure auch zum Aufschluß anderer Minerale oder Erze eingesetzt werden, z.B. von Kupfererzen.

Es ist daher insbesondere aus Gründen des Umweltschutzes notwendig, vor der Verwendung der Abfallsäure die in ihr als Verunreinigungen enthaltenen Stickstoff-Sauerstoff-Verbindungen vollständig oder teilweise zu entfernen; ein geringer Restgehalt ist bei der Aufkonzentrierung der Abfallsäure zu konzentrierter Schwefelsäure erwünscht, da er auf die Korrosionswirkung der Schwefelsäure inhibierend wirkt.

Es wurde nun ein Verfahren zur Reinigung wäßriger Schwefelsäure, die als Verunreinigungen Stickstoff-Sauerstoff-Verbindungen enthält, gefunden, das dadurch gekennzeichnet ist, daß man die Schwefelsäure in Gegenwart von Ammoniumsulfat oder Ammoniumhydrogensulfat, das aus Ammoniak enthaltenden Abgasen oder aus Ablaugen hergestellt worden ist, bei Temperaturen von 30-300°C behandelt.

Die Reaktionstemperatur bei der erfindungsgemäßen Umsetzung liegt etwa im Bereich von 30 bis 300°C, bevorzugt wird bei Temperaturen zwischen 70 und 200°C, insbesondere zwischen 100 und 150°C gearbeitet.

In einer besonders vorteilhaften Variante des erfindungsgemäßen Verfahrens dient als Ausgangs-Schwefelsäure eine wäßrige Schwefelsäure, die bei der Nitrierung aromatischer Verbindungen, insbesondere von Benzol, Toluol oder Xylol mit einem Gemisch von Oleum und/oder Schwefelsäure und hochkonzentrierter Salpetersäure als sogenannte Abfallsäure zurückgewonnen wird und die einen $H_2SO_4$-Gehalt von etwa 20 bis 96 Gew.-%, bevorzugt 20 bis 89 Gew.-%, besonders bevorzugt etwa 60 bis 80 Gew.-%, hat.

Besonders vorteilhaft verwendet man Ammoniumsulfat oder Ammoniumhydrogensulfat, das in Form einer wäßrigen Lösung mit etwa 10 bis etwa 60 Gew.-% insbesondere etwa 38 bis 42 Gew.-%, als Ablauge bei vielen organischen Reaktionen unter Verwendung von konzentrierter Schwefelsäure oder Oleum durch Neutralisierung der während oder nach der Reaktion zwangsweise anfallenden wäßrigen Schwefelsäure durch Neutralisation mit Ammoniak erhalten wird, wobei man häufig so arbeitet, daß gerade eine bei

der entsprechenden Temperatur gesättigte Ammoniumsulfat- oder Ammoniumhydrogensulfatlösung erhalten wird, und dabei deren Aussalzeffekt bezüglich der organischen Reaktionsprodukte ausnutzt. Eine derartige Ablauge wird z.B. bei der Herstellung von Cyclohexanonoxim aus Cyclohexanon und Hydroxylaminsulfat und bei der Herstellung von Caprolactam durch Umlagerung von Cyclohexanonoxim in Oleum erhalten. Aber auch bei vielen anderen Umsetzungen können derartige Ammoniumsulfat- oder Ammoniumhydrogensulfatlösungen zwangsläufig erhalten werden, z.B. auch durch Neutralisation wäßriger Ammoniaklösungen mit Schwefelsäure oder durch Behandeln Ammoniak enthaltender Abgase mit Schwefelsäure.

Die Menge der bei dem erfindungsgemäßen Verfahren zu verwendenden Ammoniumionen richtet sich nach dem Gehalt der Schwefelsäure an Stickstoff-Sauerstoff-Verbindungen.

Die Reaktion der Stickstoff-Sauerstoff-Verbindungen mit Ammoniumionen ist durch eine Reihe von Gleichgewichten und Reaktionen zwischen ihnen und mit Wasser und Sauerstoff bestimmt, bei denen intermediär auch salpetrige Säure und Salpetersäure auftreten (Hofmann & Hofmann, Anorganische Chemie, 11. Auflage (1945), Seite 103).

Bekanntlich wird die Reaktion von Ammonium- mit Nitrit-Ionen nach der Gleichung

$$[NH_4]^{\oplus} + [NO_3]^{\ominus} \longrightarrow N_2 + H_2O$$

in wäßrig-ammoniakalischer Suspension der Lösung zur Herstellung von Stickstoff im Labormaßstab benutzt (l.c., Seite 85).

Zur vollständigen Umsetzung der Stickstoff-Sauerstoff-Verbindungen ist selbstverständlich wenigstens die stöchiometrisch erforderliche Menge Ammoniumionen notwendig. Im allgemeinen wird man zur vollständigen Umsetzung eher einen Überschuß Ammoniumionen einsetzen, da die fortlaufende exakte Bestimmung der zumindest erforderlichen Menge zeitraubend und schwierig wäre; es müßte nämlich der genaue Anteil jeder möglichen Verbindung $NO_x$ festgestellt werden und die für ihren Umsatz maßgeblichen Reaktionen in Betracht gezogen werden.

Da nun aber wie gesagt die Hauptmenge der Stickstoff-Sauerstoff-Verbindungen aus $NO_2$ bzw. $N_2O_4$ besteht und sich alle Stickstoff-Sauerstoff-Verbindungen nach Lunge durch Reduktion mit Quecksilber und konzentrierter $H_2SO_4$ im Lunge-Nitrometer als NO direkt bestimmen lassen, wird die stöchiometrisch notwendige Menge im erfindungsgemäßen Verfahren entsprechend der vereinfachten Reaktionsgleichung

$$NH_4 + NO_2 \longrightarrow N_2 + 2\ H_2O$$

berechnet, das heißt je Mol Stickstoff-Sauerstoff-Verbindungen, bestimmt durch Analyse nach Lunge als NO, wird 1 g Äquivalent Ammoniumionen als stöchiometrisch erforderliche Menge verstanden.
Die zur Bestimmung der so definierten stöchiometrisch erforderlichen Menge Ammoniumionen notwendige Bestimmung der Stickstoff-Sauerstoff-Verbindungen als NO nach Lunge ist ein bekanntes analytisches Verfahren.

Andererseits kann auch ein gewisser Restgehalt Stickstoff-Sauerstoff-Verbindungen erwünscht sein, so daß eine vollständige Umsetzung nachteilig wäre.

In dem erfindungsgemäßen Verfahren verwendet man daher zwischen 0,6 und 4,0 Mol, insbesondere 0,8 bis 2,0 Mol Ammoniumionen in Form von Ammoniumsulfat oder Ammoniumhydrogensulfat je Mol Stickstoff-Sauerstoff-Verbindung, bestimmt oder gerechnet als NO.
Die Durchführung des erfindungsgemäßen Verfahrens ist außerordentlich einfach.
Man versetzt die zu reinigende, wäßrige Schwefelsäure mit der entsprechend dem Gehalt an Stickstoff-Sauerstoff-Verbindungen gewählten Menge Ammoniumionen in Form von Ammoniumhydrogensulfat und/oder Ammoniumsulfat in Substanz oder wäßriger Lösung, insbesondere der vorstehend beschriebenen zwangsweise anfallenden Lösungen (Abfall-Lösungen) und erhitzt eine gewisse Zeit auf Reaktionstemperatur.

Die für die vollständige Umsetzung der Stickstoff-Sauerstoff-Verbindungen notwendige Reaktionszeit ist abhängig von der gewählten Menge an Ammoniumionen und der Reaktionstemperatur; je größer ihr Überschuß und je höher die Temperatur, desto kürzer im allgemeinen die Reaktionszeit.

Dabei ist es nicht notwendig, das Erhitzen direkt anschließend an die Zugabe der Ammoniumionen vorzunehmen.

Es kann aus Gründen der Wirtschaftlichkeit und zur Energieeinsparung vorteilhaft sein, die erfindungsgemäße Umsetzung

bei der Reaktionstemperatur erst dann vorzunehmen, wenn aus anderen Gründen die zu reinigende Schwefelsäure erhitzt werden muß oder erhitzt wird.
Mit anderen Worten: Man kann eine nach dem erfindungsgemäßen Verfahren mit der entsprechenden Menge Ammoniumionen versetzte Abfallsäure, z.B. zur Herstellung von Düngemitteln, und/oder Herstellung von Phosphorsäure durch Aufschluß von Rohphosphaten mit dieser Abfallsäure verwenden oder nach dem sogenannten Plinke-Verfahren aufkonzentrieren, ohne sie vorher separat zu erhitzen.

Die erfindungsgemäße Umsetzung bei Reaktionstemperatur findet dann entweder während einer exothermen Umsetzung unter Selbsterwärmung oder während des Erwärmens durch zugeführte Wärme statt.
Der technische Fortschritt des erfindungsgemäßen Verfahrens liegt auf der Hand. Dabei ist es überraschend, daß durch das erfindungsgemäße Verfahren sämtliche in der zu reinigenden Schwefelsäure enthaltenen Stickstoff-Sauerstoff-Verbindungen umgesetzt werden, so daß die Schwefelsäure anschließend praktisch frei von ihnen ist.

Ferner ist überraschenderweise die nach dem erfindungsgemäßen Verfahren gereinigte Schwefelsäure anschließend weitgehend farblos und wasserklar, während z.B. Abfallsäure aus der Benzolnitrierung eine dunkelrot-braune Farbe hat.

Beispiel 1

a) Bestimmung der Stickstoff-Sauerstoff-Verbindungen:

5 ml einer bei der Nitrierung von Benzol angefallenen etwa 70 Gew.-%igen wäßrigen Schwefelsäure (Abfallsäure) werden mit 5 ml konzentrierter Schwefelsäure im Nitrometer nach Lunge mit Quecksilber geschüttelt und als NO in bekannter Weise (vgl. Hofmann & Hofmann, 1.c., Seite 114, 115) bestimmt.

Der Gehalt an Stickstoff-Sauerstoff-Verbindungen ($NO_x$) beträgt 0,108 Gew.-% oder 0,292 mMol berechnet als NO.

b) 500 ml dieser Abfallschwefelsäure wurden mit 15,43 g gleich 0,117 Mol Ammonsulfat (Molverhältnis $NO_x:NH_4$ = 1:4) versetzt und auf 150°C erhitzt. Nach 20 Minuten (einschließlich 15 Minuten Aufheizzeit) waren 710 ml Gas (22°C) ausgetrieben. Die Gasanalys ergab:

$N_2$ = 94,8 Vol-%
$O_2$ = 4,8 Vol-%
NO = 0,02 Vol-%
$NO_2$ = 0,00 Vol-%

Die Bestimmung des $NO_x$-Gehaltes gemäß a) in der Säure nach dem Erhitzen ergab 0,00 Gew.-% NO.

c) Im Vergleichsversuch, der genau wie unter b) beschrieben durchgeführt wurde, nur ohne jeden Ammon-Zusatz,

waren nach 20 Minuten erst 150 ml Gas und nach weiteren 110 Minuten insgesamt 670 ml Gas (22°C) ausgetrieben. Die Analyse ergab hier:

| | | | |
|---|---|---|---|
| $N_2$ | = 36,5 | Vol-% | |
| $O_2$ | = 0,05 | Vol-% | |
| NO | = 31,8 | Vol-% | |
| $NO_2$ | = 1,0 | Vol-% | |
| $CO_2$ | = 26,7 | Vol-% | |
| Rest | = 3,6 | Vol-% | ($N_2O$ und CO) |

Die $NO_x$-Bestimmung gemäß a) ergab in der behandelten Säure 0,04 Gew.-% NO.

d) 500 ml der Säure nach a) wurden mit 15,43 g = 0,117 Mol Ammonsulfat (Molverhältnis $NO_x:NH_4$ = 1:4) versetzt und auf 100°C erhitzt. Nach 40 Minuten (einschließlich Anheizzeit von 10 Minuten) waren 720 ml Gas (22°C) entwickelt. Deren Analyse ergab:

| | | | |
|---|---|---|---|
| $N_2$ | = 93,4 | Vol-% | |
| $O_2$ | = 3,6 | Vol-% | |
| NO | = 0,00 | Vol-% | |
| $NO_2$ | = 0,01 | Vol-% | |
| $CO_2$ | = 1,3 | Vol-% | |
| Rest | = 1,6 | Vol-% | ($N_2O$ und CO) |

Die Analyse gemäß a) der erhitzten Säure ergab 0,00 Gew.-% NO.

e) 500 ml Säure gemäß a) wurden mit 0,0234 Mol = 3,09 g Ammonsulfat (Molverhältnis $NO_x:NH_4$ = 1:0,8) versetzt und auf 100°C erhitzt. Nach 45 Minuten (einschließlich Anheizzeit von 10 Minuten) waren 540 ml Gas entbunden (22°C) mit

$N_2$ = 92,8 Vol-%
$O_2$ = 5,2 Vol-%
NO = 0,01 Vol-%
$NO_2$ = 0,00 Vol-%
$CO_2$ = 1,5 Vol-%

Die $NO_x$-Bestimmung gemäß a) in der behandelten Säure ergab 0,025 Gew.-% NO.

f) 500 ml Säure gemäß a) wurden mit 7,72 g = 0,058 Mol Ammonsulfat (Molverhältnis $NO_x:NH_4$ = 1:2) versetzt und 60 Minuten (einschließlich 10 Minuten Anheizzeit) auf 80°C erhitzt. Dabei wurden 715 ml (22°C) Gas frei der Zusammensetzung:

$N_2$ = 93,8 Vol-%
$O_2$ = 3,4 Vol-%
NO = 0,00 Vol-%
$NO_2$ = 0,01 Vol-%
$CO_2$ = 1,6 Vol-%
Rest= 0,8 Vol-% ($N_2O$ und CO)

Die $NO_x$-Bestimmung in der Säure gemäß a) nach dem Erhitzen ergab 0,00 Gew.-% NO.

Beispiel 2

Gemäß Beispiel 1 a) wurden in 5 ml einer 80 Gew.-%igen Abfall-Schwefelsäure der Gehalt an $NO_x$-Verbindungen nach Lunge zu 0,122 Gew.-% oder 0,329 mMol NO bestimmt.

a) 500 ml dieser Säure wurden ohne jeden Zusatz auf 170°C erhitzt. Nach 140 Minuten (einschließlich 30 Minuten Anheizzeit) waren 200 ml Gas (22°C) entwickelt mit

| | | | |
|---|---|---|---|
| $N_2$ | = 70,0 | Vol-% | |
| $O_2$ | = 19,9 | Vol-% | |
| NO | = 0,00 | Vol-% | |
| $NO_2$ | = 0,00 | Vol-% | |
| $CO_2$ | = 7,2 | Vol-% | |
| Rest | = 1,3 | Vol-% | ($N_2O$ und CO) |

Die $NO_x$-Bestimmung der behandelten Abfallsäure betrug nach Lunge 0,119 Gew.-% NO.

b) 500 ml derselben Säure wurden mit einer 17,39 g gleich 0,132 Mol Ammonsulfat enthaltenden Menge einer 40 Gew.-%igen Ammonsulfatlösung (Molverhältnis $NO_x$:$NH_4$ = 1:4), wie sie bei der Herstellung von Caprolactam als Ablauge anfällt, versetzt und unter Rühren auf 170°C erhitzt. Nach 30 Minuten (einschließlich 25 Minuten Anheizzeit) waren 850 ml Gas (22°C) ausgetrieben. Die Gasanalyse ergab:

$N_2$ = 90,1 Vol-%
$O_2$ = 3,1 Vol-%
NO = 0,6 Vol-%
$NO_2$ = 0,03 Vol-%
$CO_2$ = 2,9 Vol-%
Rest = 3,0 Vol-% ($N_2O$ und CO)

$NO_x$-Gehalt in der Säure nach dem Erhitzen 0,00 Gew.-%.

c) 500 ml dieser Säure wurden mit 17,39 g gleich 0,132 Mol Ammonsulfat (Molverhältnis $NO_x:NH_4$ = 1:4) versetzt und auf 130°C erhitzt. Nach 50 Minuten (einschließlich Anheizzeit 20 Minuten) waren 860 ml Gas (22°C) entwickelt mit einem Gehalt von:

$N_2$ = 77,0 Vol-%
$O_2$ = 7,5 Vol-%
NO = 0,00 Vol-%
$NO_2$ = 0,06 Vol-%
$CO_2$ = 8,7 Vol-%
Rest = 6,2 Vol-% ($N_2O$ und CO)

Danach ergab die $NO_x$-Bestimmung in der Säure nach Lunge 0,00 Gew.-% NO.

**Beispiel 3**

Gemäß Beispiel 1 a) wurden nach Lunge in 5 ml einer 90 Gew.-%igen Abfallschwefelsäure der Gehalt an $NO_2$-Verbindungen zu 0,132 Gew.-% oder 0,354 mMol NO bestimmt.

500 ml dieser Säure wurden mit einer 9,36 g gleich 0,071 Mol Ammonsulfat enthaltenden 40 Gew.-%igen Ablauge aus der Hydroxylamin-Herstellung versetzt (Molverhältnis $NO_x:NH_4$ = 1:2) und auf 190°C erhitzt. Nach 40 Minuten (einschließlich Anheizzeit von 35 Minuten) waren 910 ml Gas (22°C) entbunden mit der Zusammensetzung:

| | | | |
|---|---|---|---|
| $N_2$ | = | 91,4 | Vol-% |
| $O_2$ | = | 4,3 | Vol-% |
| NO | = | 0,3 | Vol-% |
| $NO_2$ | = | 0,04 | Vol-% |
| $CO_2$ | = | 2,2 | Vol-% |
| Rest | = | 1,6 | Vol-% ($N_2O$ und CO) |

In der behandelten Säure wurden nach Lunge 0,00 Gew.-% NO gefunden.

Beispiel 4

In 5 ml einer 60 Gew.-%igen Abfallschwefelsäure wurden an $NO_x$-Verbindungen nach Lunge gemäß 1 a) 0,124 Gew.-% gleich 0,333 mMol NO gefunden.

Von dieser Säure wurden 500 ml mit 17,62 g gleich 0,133 Mol Ammonsulfat versetzt (Molverhältnis $NO_x:NH_4$ = 1:4) und auf 130°C erhitzt. Nach 20 Minuten (bei 15 Minuten Anheizzeit) waren 760 ml Gas (22°C) ausgetrieben mit

| | | | |
|---|---|---|---|
| $N_2$ | = | 96,9 | Vol-% |
| $O_2$ | = | 2,0 | Vol-% |
| NO | = | 0,7 | Vol-% |
| $NO_2$ | = | 0,00 | Vol-% |
| $CO_2$ | = | 0,1 | Vol-% |

Die $NO_x$-Bestimmung ergab nach dem Erhitzen der Säure nach Lunge 0,02 Gew.-% NO.

Beispiel 5

In 5 ml einer 40 Gew.-%igen Abfallschwefelsäure wurden nach Lunge gemäß 1 a) 0,146 Gew.-% gleich 0,392 mMol NO gefunden.

500 ml dieser Säure wurden mit 10,35 g gleich 0,078 Mol Ammonsulfat versetzt (Molverhältnis $NO_x:NH_4$ = 1:2) und auf 100°C erhitzt. Nach 20 Minuten (Anheizzeit 10 Minuten) waren 750 ml Gas entwichen. Die Gasanalyse zeigt folgende Werte:

$N_2$ = 88,0 Vol-%
$O_2$ = 8,9 Vol-%
NO = 0,05 Vol-%
$NO_2$ = 0,02 Vol-%
$CO_2$ = 0,4 Vol-%
Rest = 2,5 Vol-% ($N_2O$ und CO)

Nach Lunge wurden nach dem Erhitzen in der Säure 0,03 Gew.-% gefunden.

Patentansprüche:

1. Verfahren zur Reinigung wäßriger Schwefelsäure, die als Verunreinigung Stickstoff-Sauerstoff-Verbindungen enthält, dadurch gekennzeichnet, daß man die Schwefelsäure in Gegenwart von Ammoniumsulfat oder Ammoniumhydrogensulfat, das aus Ammoniak enthaltenden Abgasen oder aus Ablaugen hergestellt worden ist, bei Temperaturen von 30 bis 300°C behandelt.

2. Verfahren nach Anspruch 1, dadurch gekennzeichnet, daß man wäßrige Ammonsulfatlösungen oder Ammoniumhydrogensulfatlösungen verwendet, die als Ablaugen bei der Herstellung von Oximen oder Lactamen, insbesondere bei der Herstellung von Cyclohexanonoxim und Caprolactam, anfallen.

3. Verfahren nach Ansprüchen 1 und 2, dadurch gekennzeichnet, daß man auf Temperaturen zwischen 80 und 200°C erhitzt.

4. Verfahren nach Ansprüchen 1 bis 3, dadurch gekennzeichnet, daß man nach Zugabe von Ammonsulfat oder Ammoniumhydrogensulfat die Erhitzung erst später in einer gekoppelten Reaktion vornimmt.

5. Verfahren nach Ansprüchen 1 bis 4, dadurch gekennzeichnet, daß man die Erhitzung mit der Verdampfung von Wasser aus der zu reinigenden wäßrigen Schwefelsäure koppelt.

6. Verfahren nach Ansprüchen 1 bis 5, dadurch gekennzeichnet, daß man die Behandlung mit der Erhitzung der wäßrigen Schwefelsäure beim Umsatz mit Rohphosphat koppelt und hierbei insbesondere die Wärme exothermer Reaktionen nutzt.

7. Verfahren nach Ansprüchen 1 bis 6, dadurch gekennzeichnet, daß man die Behandlung der wäßrigen Schwefelsäure mit dem Aufschluß von Mineralien oder Erzen koppelt und hierbei auch die Wärme exothermer Reaktionen nutzt.

Europäisches Patentamt

# EUROPÄISCHER RECHERCHENBERICHT

Nummer der Anmeldung
EP 78 10 0704

0000935

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 265 675 (ELI LILLY)<br>* Seite 8, Zeilen 1-28 *<br>-- | 1,3 |
| | US - A - 2 198 686 (WATSON)<br>* Seite 1, linke Spalte, Zeilen 1-51 *<br>-- | 1,3 |
| | CHEMICAL ABSTRACTS, Vol. 34, 1940, Seite 4867, "Denitration of 65-67% sulfuric acid" (ZIL'BERMAN) J.Chem.Ind. (USSR)17,47-9 (1940)<br>* Ganze Zusammenfassung *<br>---- | 1,3 |

KLASSIFIKATION DER ANMELDUNG (Int.Cl.²)

C 01 B 17/90

RECHERCHIERTE SACHGEBIETE (Int. Cl.²)

C 01 B 17/90
17/94

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 04-12-1978 | WENDLING |